# EUROPEAN PATENT APPLICATION

(11) **EP 4 845 054 A1**
(43) Date of publication of application: **25.11.2026**
(21) Application number: 25177410.5
(22) Date of filing: 19.05.2025
(51) Int. Cl.: H04B 10/071, H04B 10/85

(54) **SYSTEM AND METHOD FOR DETECTING TAMPERING WITH A FIBER OPTICAL LINK**

(71) Applicant: Adtran Networks SE, 98617 Meiningen (DE)
(72) Inventor: RAPP, Lutz, 98617 Meiningen (DE); AYALA CASTRO, Pablo Roberto, 98617 Meiningen (DE)
(74) Representative: Bratovic, Nino Maria

(57) **Abstract**

The invention provides a system and a method for detecting tampering with a fiber optical link (1) for transmission of a data signal (71) between a transmitter (10) and a receiver (20). The system comprises: an optical time domain reflectometry, OTDR, device (110), configured to generate an OTDR trace of the fiber optical link (1), and a control device (150) configured to:
- obtain information that the transmission of the data signal (71) is to be prepared;
- perform, after said information has been obtained, a tampering detection procedure according to which the fiber optical link (1) is examined for a number of predefined signs of tampering;
- determine that the fiber optical link (1) has been tampered with in case that at least a preset number of the predefined signs have been detected;
wherein the tampering detection procedure comprises at least:
- examining an OTDR trace generated by the OTDR device (110) for unexpected events, as one of predefined signs; and
- examining the fiber optical link (1) for unexpected amplified spontaneous emission as another one of the number of predefined signs.

## Description

### FIELD OF THE INVENTION

The present invention relates to a system and a method for detecting tampering with a fiber optical link for transmission of a data signal between a transmitter and a receiver. The invention anticipates various attempts at tapping the fiber optical link for information and provides means for negating them.

### BACKGROUND OF THE INVENTION

Fiber optical links are highly efficient means to transmit large quantities of data quickly. Secure and particularly eavesdropping-protected operation of optical networks is therefor of essential importance. Known approaches to eavesdropping on fiber optic connections assume tampering with the fiber route during operation in such a way that the intervention is not detected by the receiving devices.

However, during a downtime of a fiber optical link - which may be surreptitiously caused by the attacker itself - an attacker may have a chance to install a tampering device at the fiber optical link. Depending on the amount of information the attacker has about the attacked fiber optical link, such a tampering device may have sophisticated means of masking its presence.

### SUMMARY OF THE INVENTION

It is therefore one objective of the present invention to provide a system and a method for detecting tampering with (or: manipulation of) a fiber optical link, in particular tampering by installing a tampering device that comprises an erbium-doped fiber in order to mask signal attenuation caused by it (a so-called "active coupler").

According to a first aspect of the present invention, a system for detecting tampering with a fiber optical link for transmission of a data signal between a transmitter and a receiver is provided. The system comprises at least a control device configured to:
- obtain information that the transmission of the data signal is to be prepared (in particular, that the transmission of the data is to be started);
- perform, after said information has been obtained, a tampering detection procedure according to which the fiber optical link is examined for a number of predefined signs of tampering;
- determine that the fiber optical link has been tampered with in case that at least a preset number of the predefined signs of tampering have been detected;
wherein the tampering detection procedure comprises at least:
- examining the fiber optical link for unexpected amplified spontaneous emission, ASE, as another one of the number of predefined signs of tampering.

Herein, the term fiber optical link is used for the entirety of the communications arrangement between (and including both) transmitter and receiver, for example, the fiber optical line itself, the amplifiers, multiplexers, ports, and so on. It should also be understood that the fiber optical link may be arranged for bi-directional communication via one or two fibers such that any transmitter of the data signal may also act as a receiver of a data signal, and vice versa. Without loss of generality, we will describe mostly the case of one-directional communication for the sake of simplicity.

The preset number of the predefined signs that have to be detected in order for the control device to determine that the fiber optical link has been tampered with may be one, i.e. a single predefined sign being detected already implies tampering. In other variants or embodiments, the preset number may be higher, for example two, three, four, or 50% of the number of predefined signs, 75%, or even 100% of the number of predefined signs.

The term "unexpected amplified spontaneous emission" shall be understood as referring to amplified spontaneous emission, ASE, that is not accounted for by the present status of the fiber optical link as it is known to the control device. Thus, preferably, the control device is automatically provided with, or has access to, a list of elements currently active in the fiber optical link and/or information about which kinds of signals (an in particular ASE) are expected, for example derived - or calculated in situ - from a physical model. This includes interventions in the operational state as a result of the activation of the tampering detection procedure, e.g. by causing a shutdown of amplifiers connected to the fiber optical link.

For the examining of the fiber optical link for unexpected ASE, preferably all known elements of the fiber optical link that produce ASE are turned off, for example all erbium-doped fiber amplifiers, EDFAs, all Raman pumps, and so on. If some known elements producing ASE are turned on, the control device may be configured to disregard ASE generated by them.

In some advantageous embodiments, refinements, or variants of embodiments, the system may further comprise an optical time domain reflectometry, OTDR, device, configured to generate an OTDR trace of the fiber optical link. The tampering detection procedure may further comprise examining an OTDR trace generated by the OTDR device for unexpected events (e.g**.** deviations from a reference OTDR trace) as one of the number of predefined signs of tampering.

In particular, examining the OTDR trace may comprise detecting all events (typically defined as non-continuously differentiable drops or increases in the trace) in the OTDR trace and identifying events that cannot be explained using the presently available information. This may also include comparing them to the events in a reference OTDR trace (or an equivalent table of events), wherein a deviation is detected in case of an event present in the OTDR trace but not in the reference OTDR trace. The reference OTDR trace may be an OTDR trace generated before the last shutdown of the fiber optical link, a calculated ideal OTDR trace for a newly installed fiber optical link, and/or the like.

The control device may be implemented as, or comprise, a computing device. The computing device may be realized as any device, or any means, for computing, in particular for executing a software, an app, or an algorithm. For example, the computing device may comprise at least one processing unit such as at least one central processing unit, CPU, and/or at least one graphics processing unit, GPU, and/or at least one tensor processing unit, TPU, and/or at least one data processing unit, DPU, and/or at least one field-programmable gate array, FPGA, and/or at least one application-specific integrated circuit, ASIC and/or any combination of the foregoing. The computing device may further comprise a working memory operatively connected to the at least one processing unit and/or a non-transitory memory operatively connected to the at least one processing unit and/or the working memory.

The computing device may be implemented partially and/or completely in a local apparatus (such as a microcontroller) and/or partially and/or completely in a remote system such as by a cloud computing platform.

In some advantageous embodiments, refinements, or variants of embodiments, the control device is further configured to receive monitoring data from an input monitor of an amplifier of the fiber optical link and/or monitoring data from a back-reflection monitor of an amplifier of the fiber optical link. The examining of the fiber optical link for ASE may be based at least partially, or exclusively, on said monitoring data. In this way, it can be examined whether a tampering device has been attached to the transmission fiber of the fiber optical link, wherein the tampering device comprises a passive coupler as well as an erbium-doped fiber amplifier, EDFA:
If the tampering device is configured to such that its EDFA is only activated when a data signal is detected as being transmitted from the transmitter to the receiver, an OTDR trace generated before a data signal is transmitted may show an event (i.e., the drop-off in the OTDR trace due to the passive coupler of the tampering device). Such an event is also caused if the OTDR signal reaching the EDFA causes the EDFA to turn on.

If, on the other hand, the tampering device is configured to operate its EDFA in a continuous gain mode, in which the EDFA is continuously adjusted to the target gain to make the tampering device lossless, ASE is generated by the EDFA even before any data signal is transmitted.

Thus, the combination of the OTDR trace and the examining for ASE is already able to detect quite sophisticated tampering devices.

In some advantageous embodiments, refinements, or variants of embodiments, the OTDR device is configured to emit a probing signal into the optical fiber link, and the system further comprises a probing signal monitor at another side of the fiber optical link from the OTDR device. The tampering detection procedure further comprises analyzing a receiver signal of the probing signal monitor, wherein it is another one of the number of predefined signs of tampering if the receiver signal (or: measurement signal) of the probing signal monitor is incongruent with the probing signal emitted at the corresponding time.

In a simple case, such an incongruency may be that no receiver signal is measured at all at the probing signal monitor despite a probing signal being emitted into the fiber optical link. This may indicate the probing signal being shunted off inside the tampering device, for example into a spoofing apparatus configured to generate an OTDR trace mimicking an OTDR trace of a fiber optical link without a tampering device attached to it. In other words, this procedure step may be a simple check of the transparency of the fiber optical link for the probing signal of the OTDR device.

In other cases, the incongruency may relate to a wavelength spectrum of the receiver signal as compared to the wavelength spectrum of the probing signal, for example if the spectral shape does not correspond to the spectral shape at the input of the link. Incongruency further includes cases where there are unexpected or shifted dips in the signal strength or the like when varying the wavelength of the probing signal.

The OTDR device may be configured to emit, for at least part of the tampering detection procedure, as the probing signal an OTDR signal as it is used for performing the OTDR during regular operation of the fiber optical link and/or a continuous-wave signal. For example, the OTDR device may be configured to emit an OTDR signal in one or more procedure steps of the tampering detection procedure according to the regular operation, and in one or more other procedure steps as a continuous-wave signal.

In some advantageous embodiments, refinements, or variants of embodiments, the system further comprises, at one side of the fiber optical link, a pumping laser source configured to emit at least one pumping signal having preferably a wavelength in the range from 1460 nm to 1515 nm, and a pumping signal monitor at the other side of the fiber optical link configured to measure the at least one pumping signal at said other side, and it may be another one of the number of predefined signs of tampering if the at least one pumping signal measured at the pumping signal monitor is incongruent with the at least one pumping signal emitted at the corresponding time. In fiber optic links using different amplification technologies, the pumping signal may be emitted in other wavelength ranges.

In some advantageous embodiments, refinements, or variants of embodiments, the pumping laser source is configured to emit at least two pumping signals, each pumping signal having a wavelength in the range from 1460 nm to 1515 nm, the pumping signal being disjunct from one another, preferably separated from one another by 20 nm or more. In this way, even if by chance the wavelength of one of the two pumping signals coincides with the pumping laser wavelength used by the tampering device itself or causes the same average population probability of the metastable energy level as the pumping laser wavelength used by the tampering device pumping laser source does, then still the wavelength of the other of the two pumping signals will be sufficiently different such as to interfere with the function of the EDFA of the tampering device.

In some advantageous embodiments, refinements, or variants of embodiments, the pumping laser source is tunable between a first wavelength in the range from 1460 nm to 1515 nm and a second wavelength closer to a wavelength range used for the data signal (the data signal transmission band) or even overlapping with it, and/or within a wavelength range used by the OTDR device for the OTDR. The tampering detection procedure may further comprise tuning the pumping laser source between the first wavelength and the second wavelength, and it may be another one of the number of predefined signs of tampering if the pumping signal received at the pumping signal monitor exhibits at least one dip in its signal strength in between. The two wavelength ranges may furthermore be covered by two separate laser devices operating in cooperation.

In some advantageous embodiments, refinements, or variants of embodiments, the control device is configured to allow the starting of the transmission of the data signal, at least as far as confidential data are concerned, only in case that it is not determined that the fiber optical link has been tampered with, or, in other words, only in case that it has been determined that the fiber optical link has not been tampered with (i.e**.** when a number of predefined signs of tampering that have been detected is smaller than the preset number). The control device may be configured to - preferably automatically - start the transmission of the data signal in this case**.**

In some advantageous embodiments, refinements, or variants of embodiments, the tampering detection procedure is configured such that the fiber optical link is examined for one of the predefined signs of tampering after the other, preferably according to a preset order, and wherein the examining is stopped after the fiber optical link has been examined for all of the predefined signs of tampering or after the preset number of signs of tampering has been detected.

According to another aspect of the present invention, a method for detecting tampering with a fiber optical link for transmission of a data signal between a transmitter and a receiver is provided. The method comprises at least the steps of:
- determining that the transmission of the data signal is to be prepared;
- performing a tampering detection procedure according to which the fiber optical link is examined for a number of predefined signs of tampering; and
- determining that the fiber optical link has been tampered with in case that at least a preset number of the predefined signs of tampering have been detected;
wherein the tampering detection procedure comprises:
- generating an OTDR trace for the fiber optical link and examining the generated OTDR trace for unexpected events (e.g., deviations from a reference OTDR trace), as one of the number of predefined signs of tampering, and
- examining the fiber optical link for unexpected amplified spontaneous emission, ASE, as another one of the number of predefined signs of tampering.

The method may be performed using the system of any embodiment of the first aspect of the present invention, and may therefore be adapted according to any embodiments, refinements, or variants of embodiments, described or implied herein for the system according to the first aspect of the present invention, and vice versa. However, the method may also be applied independently of said system.

Further technical considerations, advantages as well as variants and refinements are presented in the following, in particular in the dependent claims as well as in the specification with respect to the drawings and the drawings themselves.

### BRIEF DESCRIPTION OF THE DRAWINGS

The invention will be explained in greater detail with reference to exemplary embodiments depicted in the drawings as appended.

The accompanying drawings are included to provide a further understanding of the present invention, are incorporated in, and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts. The numbering of method steps is done for the purpose of distinguishing between them and does not necessarily imply a temporal order although a temporal order according to the numbering is possible. In particular, one or more method steps may be performed at the same time, overlapping one another and/or the like. Although the method is presented herein in a comprehensive manner including several steps, it shall be understood that most of the steps are not essential and only provide advantageous additional benefit.

In the Fig.s:
- Fig. 1: shows a schematic diagram illustrating a typical fiber optical link being tampered with;
- Fig. 2: shows a schematic diagram illustrating a potential type of tampering device;
- Fig. 3: shows a schematic diagram of an OTDR trace;
- Fig. 4: shows a schematic diagram illustrating system according to an embodiment of the present invention;
- Fig. 5: shows a schematic diagram illustrating another potential type of tampering device;
- Fig. 6: shows a schematic diagram illustrating a system 100 according to another embodiment of the present invention;
- Fig. 7: shows a filtering characteristic of the tampering device of Fig. 5 and relevant parts of a variant system according to an embodiment of the present invention, introducing wavelength dependent power transmission;
- Fig. 8: shows a filtering characteristic of the tampering device of Fig. 5 from the input to the output and filtering characteristics of wavelength selective couplers used in the system according to an embodiment of the present invention;
- Fig. 9: shows a variant system according to an embodiment of the present invention based on detecting inconguities in the wavelength dependent transmission characteristics of the fiber optic link;
- Fig. 10: shows another possible filtering characteristic of a tampering device; and
- Fig. 11: shows a schematic flow diagram illustrating a method according to another embodiment of the present invention.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

### DETAILED DESCRIPTION OF THE DRAWINGS

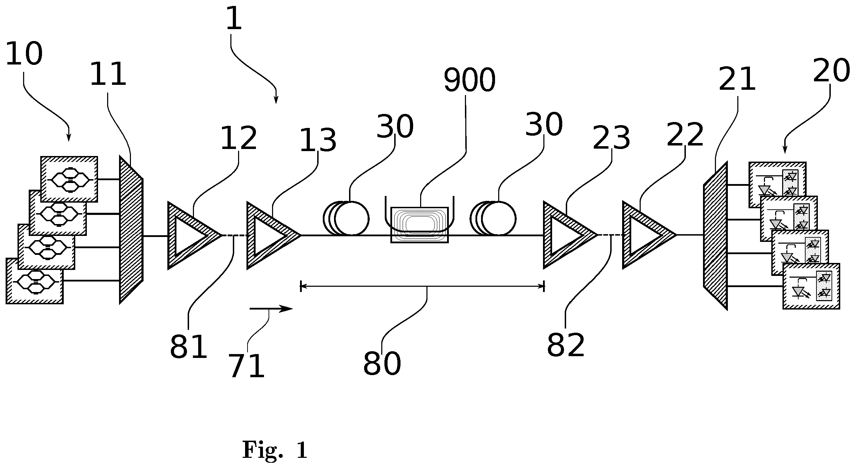

Fig. 1 shows a schematic diagram illustrating a typical fiber optical link 1 being tampered with using a tampering device 900.

The fiber optical link 1 comprises at least one transmitter 10 (for example, as shown in Fig. 1, four transmitters configured to emit data signals 71 at different wavelengths) and at least one receiver 20 (for example, as shown in Fig. 1, four receivers configured to receive the data signal 71 at the different wavelengths), linked by a common (i.e. jointly used) fiber 30.

In the shown example, the transmitters 10 are connected to the transmission fiber 30 via a (wavelength) multiplexer 11, at least one booster amplifier 12. Conversely, the four receivers 20 may be connected to the transmission fiber 30 via at least one (wavelength) demultiplexer 21 and at least one pre-amplifier 22. Since the link shown in the figure comprises several spans, the fiber optic link 1 contains two additional amplifiers 13 and 23 separating the span 80 with tampering (here chosen without loss of generality) from the preceding span 81 and the succeeding span 82 represented by dashed lines.

Since the transmitters 10 and receivers 20 are typically not relevant for the present discussion of tampering with the fiber optical link 1, they will not be shown in the following Fig.s, although it shall be understood that they will always be present, together with any necessary multiplexers, filters, and so on. It shall also be understood that in some embodiments, the entire fiber optical link 1 may be part of the system 100, or any part of the fiber optical link 1 may also serve as a part of the system 100.

As has been described in the foregoing, the fiber optical link 1 may be configured for bi-directional exchange of data signals 71. For this purposes, bidirectional signals may be transmitted in both directions via a single fiber or via two separate fibers. Without loss of generality, the following explanations will focus on the one-directional case. Moreover, in simpler variants, there may only be a single transmitter 10 and a single receiver 20, potentially obviating the need for the wavelength multiplexer 11 and demultiplexer 21.

As is indicated in Fig. 1, such a fiber optical link may in principle be attacked by an intruder attaching a tampering device 900 at the transmission fiber 30.

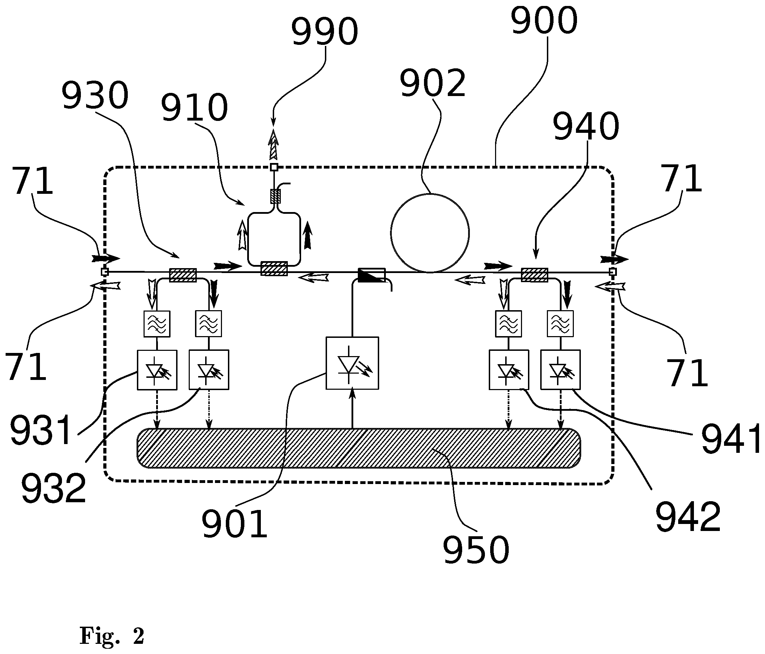

Fig. 2 shows a schematic diagram illustrating a potential type of tampering device 900. The shown variant is bi-directional so this it is able to amplify signals propagating in both directions. Thus, in principle it would not be necessary to know about the direction of signal exchange and/or the tampering device 900 would be capable of tapping signal exchanges in both ways.

The essential part of the tampering device 900 is the passive coupler 910, here shown in a bi-directional configuration, which branches off the data signals 71 from the transmission fiber 30 and leads them out to a data output 990 for output to the user of the tampering device 900.

Typically, fiber optical links 1 in the state of the art are equipped with a static OTDR device, or can be connected to a mobile OTDR device, which is configured to send an OTDR probing signal into the fiber optical link 1 and to generate an OTDR trace based on Rayleigh back-scattering along the fiber optical link 1.

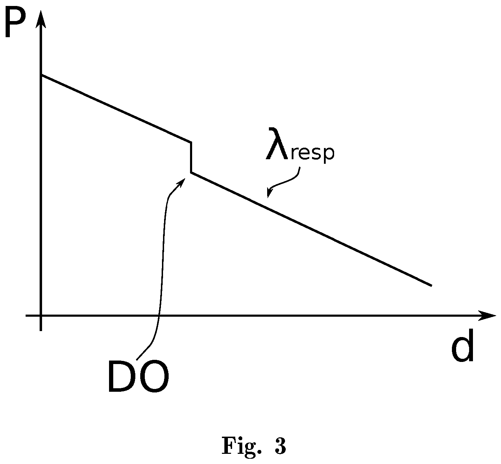

Fig. 3 schematically shows an exemplary OTDR trace λᵣₑₛₚ, represented, as is typical, as a single-logrithmic graph of the reflected signal power P as a function of distance d along the fiber optical link 1. Non-continuously differentiable drop-offs of power within the OTDR trace λᵣₑₛₚ indicate a significant instantanous attenuation event, and are commonly designated simply as "events" D0. Analyzing an OTDR trace λᵣₑₛₚ typically comprises, or consists of, detecting such events D0.

A crude tampering attempt consisting of simply attaching a passive coupler 910 to the transmission fiber 30 would thus result in an unexpected event D0, i.e. an event D0 that was not present before the tampering.

Returning to Fig. 2, a more sophisticated tampering device 900 may therefore be realized as an "active coupler", i.e. it may comprise a passive coupler 910 in combination with an erbium-doped fiber amplifier (EDFA) 902, and a tampering device pumping laser source 901 configured to pump the EDFA 902. It may further comprise a tampering device controller 950 configured to control the tampering device pumping laser source 901. It may also comprise a first bi-directional signal strength monitor 930 and a second bi-directional signal strength monitor 940 configured to measure the signal strength of the data signal 71 incoming at one end and outgoing at the other end of the tampering device 900 (regardless of the direction of travel of the data signal 71), and to provide that information to the tampering device controller 950. Each of the bi-directional signal strength monitors 930, 940 may comprise a passive coupler, and then for each direction a wavelength filter and a photo sensor, as schematically illustrated in Fig. 2.

Based on the signal strength information from the two signal strength monitors 930, 940, the tampering device controller 950 controls the tampering device pumping laser source 901 such that the attenuation caused by the passive coupler 910 is compensated, i.e., masked in an OTDR trace. In other words, the tampering device 900 may be configured to actively pump its EDFA 902 to cancel out an event D0 it might otherwise create in the OTDR trace λᵣₑₛₚ.

In this exemplary embodiment, each of the signal strength monitors 930, 940 comprises two photodiodes 931, 932; 941, 942, wherein the signal strength information provided by each of these monitors 930, 940 is either derived from the current produced by only one of the two photodiodes 931, 932; 941, 942 or from the current produced by both of the photodiodes 931, 932; 941, 942.

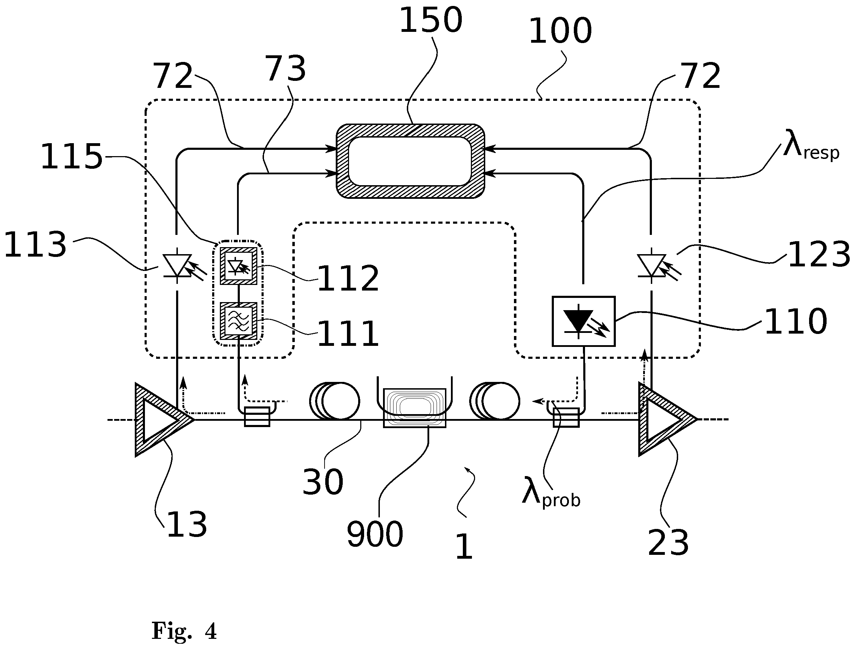

Fig. 4 shows a schematic diagram illustrating a system 100 for detecting tampering with the fiber optical link 1 according to an embodiment of the present invention.

The system 100 comprises at least a control device 150 configured to perform (or: execute) a tampering detection procedure. In this tampering detection procedure, the fiber optical link 1 is examined for each of a number of predefined signs (or: indications) of tampering, and the control device 150 is configured to determine, when at least a preset number of the predefined signs of tampering have been detected (or: recognized) during the examining of the fiber optical link 1, to determine that the fiber optical link 1 has been tampered with. The preset number may be one, i.e. any single sign of tampering is sufficient to detect tampering, or larger than one (e.g. two, three, four, etc.). The action to examine the fiber optical link 1 for one particular sign of tampering during the tampering detection procedure may also be designated as a procedure step.

The control device 150 may be configured to allow the starting of the data transmission, i.e. the transmitting of the data signal 71, at least as far as confidential data are concerned, only in case that it is not determined that the fiber optical link 1 has been tampered with, or, in other words, only in case that it has been determined that the fiber optical link 1 has not been tampered with.

The system 100 may comprise a number of additional elements and devices used for performing different examinations as part of the tampering detection procedure, they will be described in the following in more detail, together with possible tampering scenarios in which they might be useful or even necessary to detect a particular kind of tampering. In any particular application or implementation of the system 100 of the present invention, the tampering detection procedure may comprise or consists of any or all of the procedure steps described herein. The control device 150 may also be configured with a user interface configured to allow a user to customize the tampering detection procedure, i.e., select and/or de-select individual procedure steps to be performed during the tampering detection procedure.

As a first example, the control device 150 may be configured to examine, as one procedure step, the fiber optical link 1 for unexpected amplified spontaneous emission, ASE, as one of the number of predefined signs of tampering. As has been described in the foregoing, this may be done by comparing information about expected ASE with currently measured ASE given the present state of the fiber optical link 1. Preferably, for this procedure step, as many active elements of the fiber optical link 1 as possible are turned off, preferably at least the amplifiers 12, 13 and/or any EDFA that the fiber optical link 1 itself may possess.

Alternatively, information about expected ASE of the currently active elements may be used by the control device 150 to focus on the unexpected ASE. For this purpose, the control device 150 may be provided with information about the currently active elements and/or the expected ASE caused by them. In particular, the control device 150 may be configured to control all controllable elements of the fiber optical link 1, in particular for the transmission, so that it is trivially informed about any and all currently active elements.

In order to obtain information about ASE, the control device 150 may be further configured to receive monitoring data 71 from an input monitor 123 of an amplifier 23 of the fiber optical link 1 and/or monitoring 72 data from a back-reflection monitor 114 of an amplifier 13 of the fiber optical link 1. The input monitor 123 and/or the back-reflection monitor 114 may be part of the system 100 or separate from it. In many cases, they are part of the fiber optical link 1 according to the prior art already, so they can advantageously be utilized in the tampering detection procedure without causing additional costs.

The examining of the fiber link for ASE may be based at least partially, or exclusively, on said monitoring data 72. Alternatively or additionally, the system 100 may comprise a dedicated monitor provided solely for the purpose of detecting ASE, and sending its monitoring data 72 to the control device 150 for the tampering detection procedure.

As has been described in the foregoing, the procedure step of examining for ASE can serve to detect the presence of a tampering device 900 operating its EDFA 902 in a continuous gain mode.

In Fig. 4 the system 100 is also shown as comprising an optical time domain reflectometry (OTDR) device 110 configured to send an OTDR probing signal λ_{prob} into the fiber optical link 1 and to generate an OTDR trace λᵣₑₛₚ (or: response signal) based thereon. The OTDR trace λᵣₑₛₚ (or information based thereon, e.g.**,** simply the detected events, or the detected unexpected events) may then be provided to the control device 150 for analysis.

Thus, the tampering detection procedure may comprise examining the OTDR trace λᵣₑₛₚ generated by the OTDR device 110 for deviations from a reference OTDR trace, as one of the number of predefined signs of tampering. As has been described in the foregoing, such deviations may in particular comprise unexpected events in the OTDR trace λᵣₑₛₚ. Based thereon, a tampering using a pure passive coupler 910, or a tampering device 900 with an EDFA 902 operating in a standard mode of operation, in which the tampering device pumping laser source 901 is turned off when there is no data signal 71, can be detected.

In Fig. 4, for increased clarity, the transmitter 10 and receiver 20 are not shown, and neither are the boost amplifier 12, the pre-amplifier 22, the multiplexer 21 and the demultiplexer 31, which, however, are still part of the fiber optical link 1.

The system 100 in the shown example further comprises a probing signal monitor 115 at the other side (or: end) of the transmission fiber 30 from the OTDR device 110, configured to receive the probing signal λ_{prob}. Specifically, the probing signal monitor 115 may be configured with a photosensor 112 and a wavelength filter 111 configured to let pass only wavelengths which the OTDR device 110 is capable of emitting, e.g. wavelengths in the infrared spectrum, for example between 1620 nm and 1680 nm, and to generate a receiver signal 73 (or: measurement signal) based on the signals the photosensor 112 receives (or: measures, or: detects).

The tampering detection procedure may comprise a procedure step of analyzing the receiver signal of the probing signal monitor 115, wherein it is another one of the number of predefined signs of tampering if the receiver signal of the probing signal monitor 115 is incongruent with the probing signal λ_{prob} emitted at the corresponding time.

In a simple variant, the control device 150 may be configured to analyze whether the probing signal λ_{prob} arrives at the probing signal monitor 115 at all. Typically, for performing OTDR, only the OTDR trace λᵣₑₛₚ is recorded and evaluated.

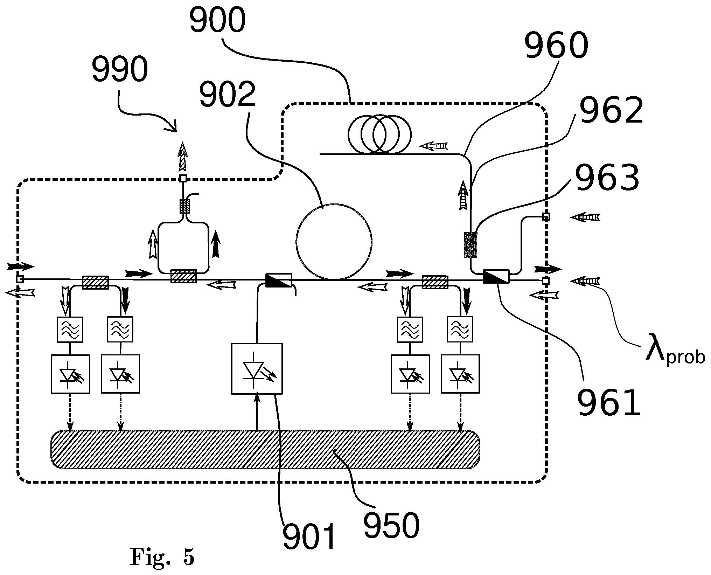

Fig. 5 shows a hypothetical sophisticated tampering device 900 which, compared to the tampering device 900 of Fig. 2, further comprises a spoofing apparatus 960 for creating a fake OTDR trace λᵣₑₛₚ. The spoofing apparatus 960 shown comprises a wavelength demultiplexer 961 configured to shunt the probing signal λ_{prob} emitted by the OTDR device 110 into a shunt-off fiber 962 of the spoofing apparatus 960. The spoofing apparatus 960 may further comprise an attenuator 963 and/or the shunt-off fiber 962 may be provided with a smaller mode field diameter than the transmission fiber 30, both of which may be adapted such that the OTDR trace λᵣₑₛₚ generated within the spoofing apparatus 960 as a response to the probing signal λ_{prob} closely mimics the pattern (specifically, its events and non-events) which the OTDR trace λᵣₑₛₚ would exhibit if no tampering device 900 was present.

However, the procedure step of analyzing the receiver signal 73 is sufficient to detect this kind of spoofing, as in case of the shunt-off of the probing signal λ_{prob} into the spoofing apparatus 960 there will be no corresponding signal received at the probing signal monitor 115. Thus, the control device 150 will have the information that the probing signal λ_{prob} has been sent out (by the OTDR device 110) and the information that no corresponding measurement has been made (based on the receiver signal 73), which is incongruent and thus a sign of tampering.

Advantageously, for this procedure step, the probing signal λ_{prob} is changed (e.g., due to a corresponding control signal from the control device 150 to the OTDR device 110) from its usual waveform pattern (for example, a pulsed signal) to a continuous-wave signal, in order to facilitate detection at the probing signal monitor 115.

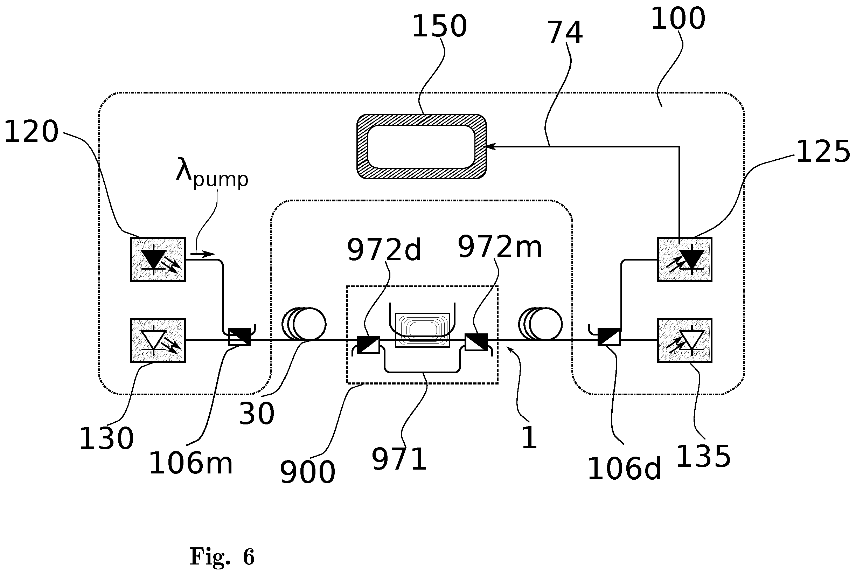

Fig. 6 shows a schematic diagram of a system 100 according to another embodiment of the present invention. In Fig. 6, only the elements of the system 100 are shown that are used for the explanation of further functions and capabilities of the system 100, specifically with respect to additional or alternative procedure steps of the tampering detection procedure. It shall be understood that the system 100 of Fig. 6 may comprise any or all elements as shown in and discussed with respect to Fig. 4, and vice versa.

One fundamental fact exploited for the system 100 of Fig. 6 is that the tampering devices 900 of both Fig. 2 or Fig. 5 are "active couplers", meaning that they necessarily include an EDFA 902 to attempt to make the tampering device 900 attenuation-free (or: OTDR-event free). Such EDFAs 900 work with an inversion of erbium-ion energy levels such that incoming photons with wavelengths within a pumping wavelength band help to populate a metastable energy level, either via a direct transition from the ground level to this energy level or via nonradiative decay by phonons from a higher pump band. When incoming photon of the data signal (typically in the C-band) enter the EDFA 902, they can stimulate emission of identical photons by erbium ions relaxing from the metastable energy level, thus creating the desired amplifying effect.

The system 100 can exploit this fact based on the notion that a pumping laser can be inserted into the fiber optical link 1 for the purpose of activating an EDFA 902 in a potentially present tampering device 900.

The system 100 may therefore comprise a pumping light source 120 configured to emit a pumping signal λₚᵤₘₚ into the transmission fiber 30. The pumping light source 120 is configured to emit the pumping signal λₚᵤₘₚ with a wavelength suitable for interfering with an erbium-doped fiber amplifier, for example with a wavelength in the range of 1470 to 1490 nm.

Such a pumping signal λₚᵤₘₚ will interfere with the population inversion of the EDFA 902 of the tampering device 900 which in turn will interfere with the amplifier gain of the EDFA 902 and thus the attempts of the tampering device 900 to compensate any attenuation of the data signal 71 by the tampering device 900, leading to the appearance of events within the OTDR trace λᵣₑₛₚ. Thus, the tampering detection procedure may comprise emitting a pumping signal λₚᵤₘₚ into the transmission fiber 30 by the pumping light source 120, generating an OTDR trace λᵣₑₛₚ at the same time by the OTDR device 110, and examining this OTDR trace λᵣₑₛₚ for anomalies, in particular unexpected events. One sign of tampering may then be the presence of such anomalies, in particular unexpected events.

The pumping light source 120 may be configured to emit at least two pumping signals λₚᵤₘₚ₁, λₚᵤₘₚ₂, each pumping signal λₚᵤₘₚ₁, λₚᵤₘₚ₂ having a wavelength in the range from 1460 nm to 1515 nm, the pumping signals λₚᵤₘₚ₁, λₚᵤₘₚ₂ being disjunct from one another, preferably separated from one another by 20 nm or more. In this case, even when one of the two pumping signals λₚᵤₘₚ₁, λₚᵤₘₚ₂ should by chance coincide with the actual pumping wavelength used by the tampering device pumping laser source 901 or cause the same average population probability as the tampering device pumping laser source 901 integrated into the tampering device 900 (or: into the active coupler), the respective other of the two pumping signals λₚᵤₘₚ₂, λₚᵤₘ₁ will advantageously still sufficiently interfere with the function of the EDFA 902 of the tampering device 900.

A sophisticated tampering device 900 may, however, be equipped with a pumping signal bypass 971 comprising a wavelength multiplexer 972m and a demultiplexer 972d at both sides of at least the EDFA 902 in order to protect it from interference by the externally inserted pumping signal λₚᵤₘₚ. The wavelength multiplexer 972m and the wavelength demultiplexer 972d are typically formed by the same component since such passive optical components are reciprocal devices, i.e**.** can be operated in both possible transmission directions. The wavelength multiplexer 972m and the wavelength demultiplexer 972d are denoted in the following as a wavelength multiplexing device 972 if further differentiation is not required.

The wavelength multiplexer 972m and the wavelength demultiplexer 972d of the tampering device 900 must accordingly be configured to separate the data signal 71 (which must pass through the EDFA 902 in order to mask the attenuation caused by the tampering device 900) and the pumping signal λₚᵤₘₚ, which must pass through the tampering device 900 unchanged to mask the presence of the EDFA 902 in the fiber optical link 1.

In order to counteract such a tampering device 900, the system 100 may also comprise a pumping signal monitor 125 arranged at the other end of the fiber optical link 1 from the pumping light source 120 specifically at the other end of the transmission fiber 30, the pumping signal monitor 125 being configured to receive and measure (or: detect) such a pumping signal λₚᵤₘₚ.

Thus, the tampering detection procedure may further comprise analyzing a measuring signal 74 of the pumping signal monitor 125, and it may be (another) one of the number of predefined signs of tampering if the at least one pumping signal λₚᵤₘₚ measured at the pumping signal monitor is incongruent with the at least one pumping signal emitted at the corresponding time.

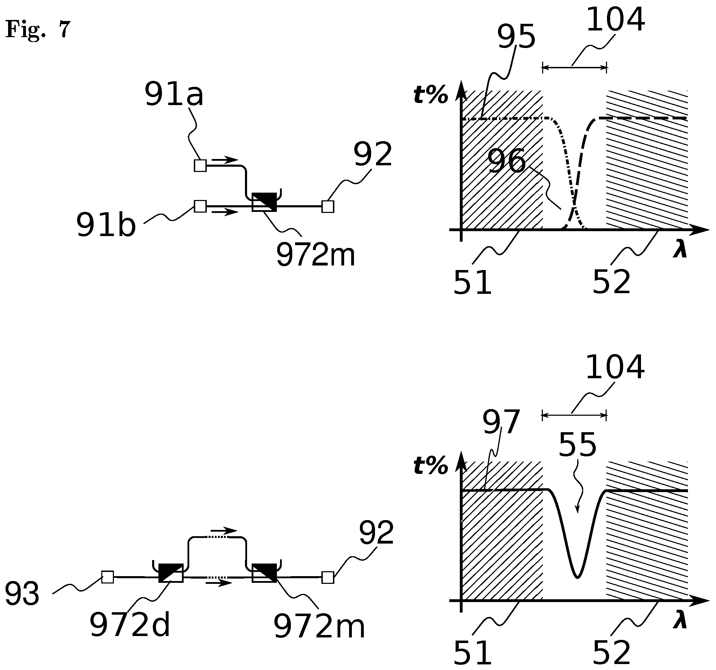

The function of the wavelength multiplexer 972m and the wavelength demultiplexer 972d of the tampering device 900 requires them to have a filter profile as shown in Fig. 7, selecting between a pumping signal transmission band 51 and a data signal transmission band 52.

The upper right part of Fig. 7 shows the transmission characteristics of a single wavelength multiplexer 972m with input ports 91a and 91b, and an output port 92 (see sketch in upper left part of Fig. 7). Wavelength dependence of power transmission from input port 91a to output port 92 is represented by a curve showing the power transmission characteristics 95 when directing (bypassing) pump light efficiently from the input port 91a to the output port 92, whereas light in the data signal transmission band 52 is strongly attenuated.

Since the transition of the power transmission characteristics 95 from transmission to attenuation is not infinitesimally steep, there is always a wavelength gap 104 between the pump signal transmission band 51 and the data signal transmission band 52. Power transmission characteristics curve 96 illustrates power transmission from input port 91b to output port 92 for the data signal 71 and shows inverse characteristics such that power in the pumping signal transmission band 51 is strongly attenuated and power in the data signal transmission band 52 is efficiently coupled into the output port 92.

Typically, the wavelength multiplexer 972m and the wavelength demultiplexer 972d are formed by as an identical component. The different terms just indicate the function of the component in the system architecture, whereas the power dependent transmission characteristics 95, 96 are identical. In conclusion, the setup shown in the lower left part of Fig. 7 forming a pumping signal bypass 71 by using a wavelength demultiplexer 972d and a wavelength multiplexer 972m has a power transmission characteristics as illustrated by curve 97 with a dip 55 in the wavelength gap 104 in the lower right part of Fig. 7. The same applies to the wavelength demultiplexer 972d, which receives signals from an input port 93 (connected to the transmission fiber 30) and sends the pumping signal λₚᵤₘₚ into the bypass and the input port 91a of the multiplexer 972m, and sends the data signal 71 to the passive coupler 910 and the input port 91b of the multiplexer 972m.

When the pumping light source 120 is tunable between a first wavelength in the pumping signal transmission band 51 and a second wavelength towards the data signal transmission band 52 and reaching at least the wavelength gap 104, the measuring signal 74 at the pumping signal monitor 125 will show a characteristic dip 55 in the transmission t% as a function of the wavelength λ**.** Thus, one of the number of predefined signs of tampering may be that the measuring signal 74 at the pumping signal monitor 125 exhibits a signal strength dip 55 when compared to the original pumping signal λₚᵤₘₚ emitted by the pumping light source 120, in particular the dip 55 in the gap between the pumping signal transmission band 51 and the data signal transmission band 52.

Another predefined sign of tampering may simply be a different link loss (after accounting for the different properties of the signals) for the pumping signal λₚᵤₘₚ than for the data signal 71 (or, a test data signal 71 emitted for the purpose of the tampering detection procedure) due to the fact that the tampering device 900 is configured to bypass the pumping signal λₚᵤₘₚ to a different line from the data signal 71.

The system 100 may, for the evaluation of the filtering characteristics of the transmission fiber 30 (including a potential tampering device 900), use the transmitter 10 and/or receiver 20 of the fiber optical link 1, and/or it may comprise its own signal light source 130 configured to emit light in the spectral range of the data signal 71 (e.g., in the C-band) and/or its own signal light monitor 135 configured to measure light in the spectral range of the data signal 71 (e.g., in the C-band), wherein preferably all of these units are in communication with the control device 150 so that the control device 150 is informed about what kinds of signals or light are currently emitted into the transmission fiber 30, and what kinds of measurements are currently taken, in order to find anomalies that may constitute one of the predefined signs of tampering.

Detecting the dip 55 can be achieved by directly connecting a tunable laser to the fiber optic link 1 that is tunable at least within the wavelength range of the wavelength gap 104. However, in a preferred configuration, a single device of the system 100, connected once to the fiber optic link 1, is performing several of the detection techniques (i.e., the procedure steps of the tampering detection procedure). In particular, the device needs to be configured to combine at least one signal in the pump signal wavelength band 51 with at least one signal in the data signal wavelength band 52 in the transmission fiber 30**.**

In the example as shown in Fig. 6, this combining is achieved by means of a wavelength multiplexer 106m and signals in the two respective bands are spatially separated by a wavelength demultiplexer 106d in order to be detected by different monitors 125 and 135. The wavelength multiplexer 106m and the wavelength demultiplexer 106d are denoted in the following as a wavelength multiplexing device 106 if further differentiation is not required.

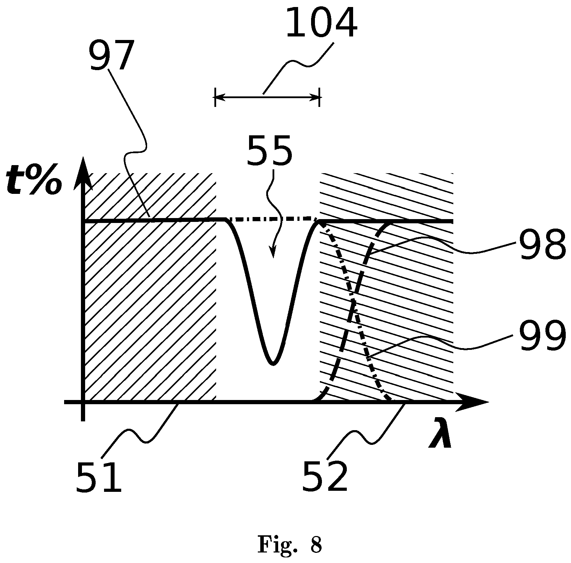

Detecting a power drop within wavelength gap 104 as part of the tampering detection procedure requires that the pumping signal λₚᵤₘₚ can be tuned to a wavelength in this wavelength range. For this purpose, the transmission characteristics of the wavelength multiplexing devices 106 of the system 100 are preferably chosen to be different from the wavelength characteristics of the wavelength multiplexing devices 972. As illustrated in Fig. 8, the pump signal wavelength band 51 of the wavelength multiplexing device 106 is advantageously extended towards the data signal wavelength band 52, as indicated by the two power transmission curves 98 and 99 describing the transmission of signals from one of the input ports to the output ports, as already explained in detail in view of Fig. 7 showing the characteristics of the wavelength multiplexing devices 972. In conclusion, the wavelength gap of resulting from the use of the wavelength multiplexing devices 106 of the system 100 is shifted towards or even into the data signal wavelength band of the system 100. In this way, tuning the pump wavelength either by using a tunable laser source emitting light in the pump wavelength range or by using several pump lasers is possible.

Using wavelength multiplexing devices 106 with transmission characteristics shifted in wavelength in this manner is possible when executing the tampering detection procedure since these wavelength multiplexing devices 106 (together with other elements of the system 100 or even together with the entire system 100) can be removed from the fiber optical link 1 after finishing this procedure. By contrast, such wavelength multiplexing devices are not suitable for use in the active coupler, i.e., the tampering device 900, since the reduced bandwidth available for data transmission would be at latest be detected when starting or restarting data transmission.

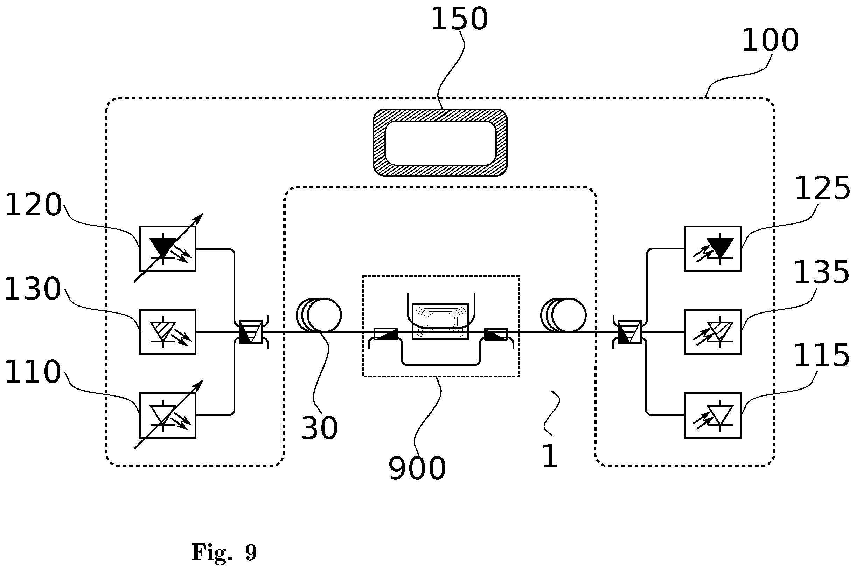

As shown in Fig. 9, the system 100 may comprise its own tunable pumping light source 120, its own pumping signal monitor 125, its own signal light source 130, its own signal light monitor 135, its own tunable OTDR device 110, and/or its own probing signal monitor 115. By multiplexing the emissions of these different light sources 110, 120, 130, any unknown multiplexers/demultiplexers potentially introduced by the tampering device 900 may be detected.

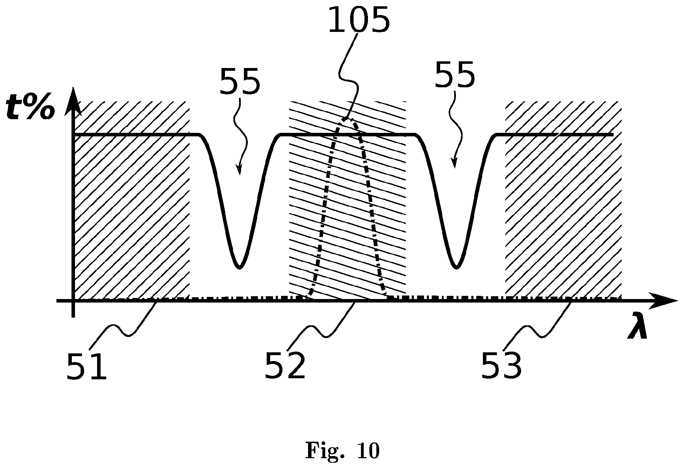

Fig. 10 shows a possible two-filter-gap structure exhibited by a tampering device 900 with bypasses for signals with wavelengths in the pumping signal transmission band 51, and for signal with wavelengths in the OTDR probing signal transmission band 53. By tuning (or: scanning) the wavelength spectrum in particular in the gaps between the signal bands 51, 52, 53, any dips 55 in the transmission t% caused by wavelength multiplexers of the tampering device 900 may be detected. As has been described in the foregoing with respect to Fig. 7, each such dip 55 may be defined as one of the predefined signs of tampering. Due to the shifting of the power transmission characteristics 98, 99, the bandwidth available for data transmission is reduced, as illustrated by curve 105 illustrating power transmission characteristics in the data signal path.

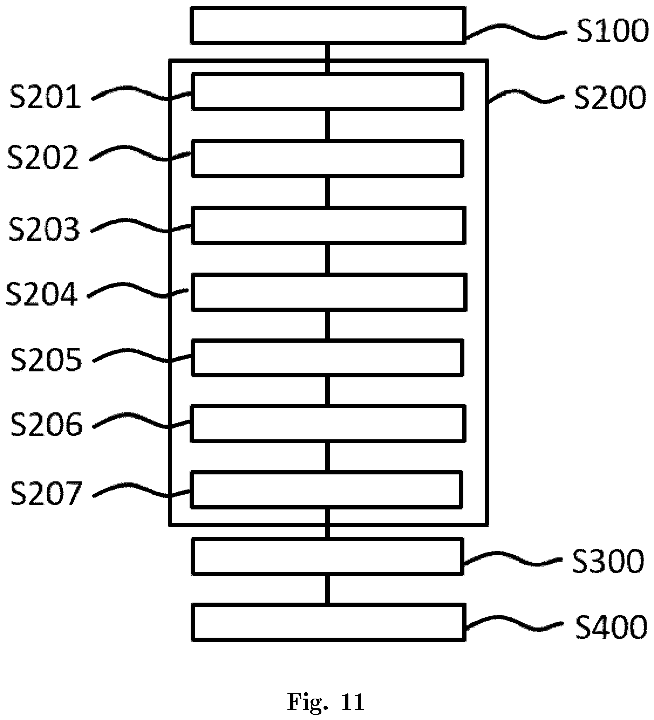

Fig. 11 shows a schematic flow diagram illustrating a method according to another embodiment of the present invention, i.e., a method for - in particular automatically - detecting tampering with a fiber optical link 1 for transmission of a data signal 71 between a transmitter 10 and a receiver 20. For improved understanding, and because the method may be adapted according to any options, variants, or refinements described with respect to embodiment of the system of the present invention (and vice versa), in the following reference will also be made to the preceding Figures and their reference signs, although it shall be understood that the method may be also independently performable.

In a step S100, it is determined, in particular automatically, that the transmission of the data signal 71 is to be prepared. This may be, for example, by receiving information that the transmission should be started, for example an initial transmission after installing the fiber optical link 1, or a re-start of the transmission after a pause, for example due to maintenance or repair work. An intruder intending to use a tampering device 900 may cause damage to a part of the fiber optical link 1 in order to be able to attach the tampering device 900 to the fiber optical link 1 at another location undetected. For this reason, it is advantageous if the presently described method is performed in any instance where the transmission of the data signal 71 is to be prepared, and in particular when it is to be started. The information that the transmission is to be prepared may be received by the control device 150 of the system 100, for example.

In a step S200, a tampering detection procedure is performed, according to which (or: in which, or: as a part of which) the fiber optical link 1 is examined for a number of predefined signs of tampering.

In the foregoing, a large number of such predefined signs of tampering have been listed and explained, and it shall be understood that in any particular embodiment, the fiber optical link 1 may be examined for any or all of them. In some variants, a user may be able, or prompted to, select a number of signs of tampering for which the fiber optical link 1 should be examined; in other variants, the method is automatically performed in a predefined configuration.

Thus, the tampering detection procedure may include any number of procedure steps, each one configured to examine (preferably automatically) the fiber optical link 1 for (at least) one of the predefined signs of tampering:
In an optional procedure step S201, an OTDR trace (or: response signal) λᵣₑₛₚ for the fiber optical link 1 may be generated and examined for deviations from a reference OTDR trace, as one of the number of predefined signs of tampering.
In an optional procedure step S202, the fiber optical link 1 is examined for unexpected amplified spontaneous emission, ASE, as another one of the number of predefined signs of tampering.
In an optional procedure step S203, a receiver signal 73 of a probing signal monitor 115 may be analyzed, wherein it is one of the number of predefined signs of tampering if the receiver signal 73 (or: measurement signal) of the probing signal monitor 115 is incongruent with the probing signal λ_{prob} emitted at the corresponding time, as has been described in the foregoing with respect to Fig. 4. For example, the probing signal λ_{prob} may be emitted by the OTDR device 110, preferably in a continuous-wave pattern, and the incongruity may be that the receiver signal 73 shows no sign of said probing signal λ_{prob}.
In an optional procedure step S204, at least one pumping signal λₚᵤₘₚ is emitted into the transmission fiber 30 of the fiber optical link 1, and the at least one pumping signal λₚᵤₘₚ is measured at the other side of the transmission fiber 30, wherein it is one of the number of predefined signs of tampering if the at least one pumping signal measured is incongruent with the at least one pumping signal λₚᵤₘₚ emitted at the corresponding time, as has been described in the foregoing.
In an optional procedure step S205, a pumping signal λₚᵤₘₚ and/or a probing signal λ_{prob} is emitted into the transmission fiber 30 of the fiber optical link 1, an OTDR trace response signal λᵣₑₛₚ is generated at the same time, and this OTDR trace is examined for anomalies, in particular unexpected events, wherein the presence of such anomalies, in particular unexpected events, is one of the number of predefined signs of tampering.
In an optional procedure step S206, a pumping signal λₚᵤₘₚ is emitted into the transmission fiber 30 and its wavelength is tuned between a first wavelength in the pumping signal transmission band 51 and a second wavelength in the data signal transmission band 52, and a measuring signal 74 is generated at the other end of the transmission fiber 30, wherein it is one of the number of predefined signs of tampering if the measuring signal 74 exhibits a dip 55 in the gap between the pumping signal transmission band 51 and the data signal transmission band 52 that is not present in the tuned pumping signal λₚᵤₘₚ.
In an optional procedure step S207, a pumping signal λₚᵤₘₚ and a (test) data signal 71 are emitted into the transmission fiber 30, and a link loss for the pumping signal λₚᵤₘₚ and a link loss for the (test) data signal 71 is measured, wherein it is one of the number of predefined signs of tampering if, after accounting for the different properties of the signals, 71, λₚᵤₘₚ the measured link loss is different. As has been described in the foregoing, this can indicate that the pumping signal λₚᵤₘₚ is sent by a tampering device 900 to a bypass route, as shown in Fig. 6.

The tampering detection procedure may be configured such that the fiber optical link 1 is examined for one of the predefined signs of tampering after the other (i.e.**,** all, or the selected, procedure steps S201-S207 are performed one after another), preferably according to a preset order. The examining may be stopped after the fiber optical link 1 has been examined for all of the predefined signs of tampering or after the preset number of signs of tampering has been detected. The order in which the procedure steps S201-S207 are performed and/or the selection of procedure steps S201-S207 that are performed may be preset and/or adjustable by a user, e.g. via a user interface.

In a step S300, it is determined, preferably automatically, that the fiber optical link 1 has been tampered with in case that at least a preset number of the predefined signs of tampering have been detected, and, conversely, it is determined that the fiber optical link 1 has not been tampered with, if no predefined signs of tampering have been detected and/or if less than the preset number of predefined signs of tampering have been detected.

In a step S400, the starting of the transmission of the data signal 71 is allowed, but only in case that it is not determined that the fiber optical link 1 has been tampered with, or, in other words, only in case that it is determined in step S300 that the fiber optical link 1 has not been tampered with. If this is the case, in a step S500 the transmission of the data signal 71 may be started.

### List of reference signs

- 1: fiber optical link
- 10: transmitter (or transceiver)
- 11: multiplexer
- 12: booster amplifier
- 13: amplifier
- 20: receiver (or transceiver)
- 21: demultiplexer
- 22: pre-amplifier
- 23: amplifier
- 30: transmission fiber
- 51: pumping signal transmission band
- 52: data signal transmission band
- 53: OTDR probing signal transmission band
- 55: transmission strength dip
- 71: data signal
- 72: monitoring data
- 73: receiver signal
- 74: measurement signal
- 80: span with tampering
- 81: previous span
- 82: succeeding span
- 91a: input port
- 91b: input port
- 92: output port
- 93: input port
- 95: power transmission characteristics curve
- 96: power transmission characteristics curve
- 97: power transmission characteristics curve
- 98: power transmission characteristics curve
- 99: power transmission characteristics curve
- 100: system
- 104: wavelength gap between two transmission bands
- 105: power transmission characteristics in the data signal path
- 106d: wavelength demultiplexer
- 106m: wavelength multiplexer
- 110: OTDR device
- 115: probing signal monitor
- 111: wavelength filter
- 112: photosensor
- 113: back-reflection monitor
- 120: pumping signal source
- 123: input monitor
- 125: pumping signal monitor
- 130: signal light source
- 135: signal light monitor
- 150: control device
- 900: tampering device
- 901: tampering device pumping laser source
- 902: erbium-doped fiber amplifier
- 910: passive coupler
- 930: first bi-directional signal strength monitor
- 931: photodiode
- 932: photodiode
- 940: second bi-directional signal strength monitor
- 941: photodiode
- 942: photodiode
- 950: tampering device controller
- 960: spoofing apparatus
- 961: wavelength demultiplexer
- 962: shunt-off fiber
- 963: attenuator
- 971: pumping signal bypass
- 972d: wavelength demultiplexer
- 972m: wavelength multiplexer
- 990: data output
- λ_{prob}: probing signal
- λₚᵤₘₚ: pumping signal
- λᵣₑₛₚ: OTDR trace, or: response signal
- d: distance
- D0: event
- P: power
- t%: transmission
- S100..S400: method steps
- S201..S207: procedure steps of the tampering detection procedure

## Claims

1. A system (100) for detecting tampering with a fiber optical link (1) for transmission of a data signal (71) between a transmitter (10) and a receiver (20), comprising:
an optical time domain reflectometry, OTDR, device (110), configured to generate an OTDR trace (λᵣₑₛₚ) of the fiber optical link (1); and
a control device (150) configured to:
- obtain information that the transmission of the data signal (71) is to be prepared;
- perform, after said information has been obtained, a tampering detection procedure according to which the fiber optical link (1) is examined for a number of predefined signs of tampering;
- determine that the fiber optical link (1) has been tampered with in case that at least a preset number of the predefined signs of tampering have been detected;
wherein the tampering detection procedure comprises at least:
- examining (S201) an OTDR trace (λᵣₑₛₚ) generated by the OTDR device (110) for unexpected events as one of the number of predefined signs of tampering; and
- examining (S202) the fiber optical link (1) for unexpected amplified spontaneous emission, ASE, as another one of the number of predefined signs of tampering.

2. The system (100) of claim 1,
wherein the control device (150) is further configured to receive monitoring data (72) from an input monitor (123) of an amplifier (23) of the fiber optical link and/or monitoring data (72) from a back-reflection monitor (113) of an amplifier (13) of the fiber optical link (1), and wherein the examining of the fiber optical link (1) for ASE is based at least partially on said monitoring data (72).

3. The system (100) of claim 1 or 2,
wherein the OTDR device (110) is configured to emit a probing signal (λ_{prob}) into the optical fiber link (1), and
wherein the system (100) further comprises a probing signal monitor (115) at another side of the fiber optical link (1) from the OTDR device (110),
and wherein the tampering detection procedure further comprises analyzing a receiver signal (73) of the probing signal monitor (115), wherein it is another one of the number of predefined signs of tampering if the receiver signal (73) of the probing signal monitor (115) is incongruent with the probing signal (λ_{prob}) emitted at the corresponding time.

4. The system (100) of claim 3,
wherein the OTDR device (110) is configured to emit, for at least part of the tampering detection procedure, as the probing signal (λ_{prob}) an OTDR signal as it is used for performing the OTDR during regular operation of the fiber optical link (1) and/or a continuous-wave signal.

5. The system (100) of any of claims 1 to 4,
further comprising, at one side of the fiber optical link (1), a pumping light source (120) configured to emit at least one pumping signal (λₚᵤₘₚ), and a pumping signal monitor (125) at the other side of the fiber optical link (1) configured to measure the at least one pumping signal (λₚᵤₘₚ) at said other side,
and wherein it is another one of the number of predefined signs of tampering if the at least one pumping signal measured at the pumping signal monitor (125) is incongruent with the at least one pumping signal (λₚᵤₘₚ) emitted at the corresponding time.

6. The system (100) of claim 5,
wherein the pumping light source (120) is configured to emit at least two pumping signals (λₚᵤₘₚ), each pumping signal (λₚᵤₘₚ) having a wavelength in the range from 1460 nm to 1515 nm, the pumping signals being disjunct from one another, preferably separated from one another by 20 nm or more.

7. The system (100) of claim 5 or 6,
wherein the pumping light source (120) is tunable between a first wavelength in the range from 1460 nm to 1515 nm and a second wavelength closer to a wavelength range used for the data signal or even overlapping with it and/or within a wavelength range used by the OTDR device (110) for the OTDR,
wherein the tampering detection procedure further comprises tuning the pumping light source (120) between the first wavelength and the second wavelength and wherein it is another one of the number of predefined signs of tampering if the pumping signal (λₚᵤₘₚ) received at the pumping signal monitor (125) exhibits at least one dip (55) in its signal strength in between.

8. The system (100) of any of claims 1 to 7,
wherein the control device (150) is configured to allow the starting of the transmission of the data signal (71) only in case that it is not determined that the fiber optical link (1) has been tampered with.

9. The system (100) of any of claims 1 to 8,
wherein the tampering detection procedure is configured such that the fiber optical link (1) is examined for one of the predefined signs of tampering after the other, preferably according to a preset order, and wherein the examining is stopped after the fiber optical link (1) has been examined for all of the predefined signs of tampering or after the preset number of signs of tampering has been detected.

10. A method for detecting tampering with a fiber optical link (1) for transmission of a data signal (71) between a transmitter (10) and a receiver (20), comprising at least steps of:
determining (S100) that the transmission of the data signal (71) is to be prepared;
performing (S200) a tampering detection procedure according to which the fiber optical link (1) is examined for a number of predefined signs of tampering; and
determining (S300) that the fiber optical link has been tampered (1) with in case that at least a preset number of the predefined signs of tampering have been detected;
wherein the tampering detection procedure comprises:
generating (S201) an OTDR trace for the fiber optical link (1) and examining the generated OTDR trace (λᵣₑₛₚ) for unexpected events, as one of the number of predefined signs of tampering, and
examining (S202) the fiber optical link (1) for unexpected amplified spontaneous emission, ASE, as another one of the number of predefined signs of tampering.
